# EUROPÄISCHE PATENTANMELDUNG

(11) **EP 2 743 653 A1**
(43) Veröffentlichungstag der Anmeldung: **18.06.2014**
(21) Anmeldenummer: 12196843.2
(22) Anmeldetag: 13.12.2012
(51) Int. Cl.: G01F 1/66, G10K 11/00, B06B 1/06

(54) **Ultraschallwandler und Verfahren zum Erzeugen und/oder Aufnehmen von Ultraschallsignalen**

(71) Anmelder: SICK AG, 79183 Waldkirch (DE)
(72) Erfinder: Speidel, Michael, 79110 Freiburg (DE)
(74) Vertreter: Hehl, Ulrich

(57) **Zusammenfassung**

Es wird ein Ultraschallwandler (10) mit einem Schwingkörper (12) zum Erzeugen und/oder Aufnehmen von Ultraschall und einem Dämpfungskörper (14) angegeben, der einen an einer Rückseite des Schwingkörpers (12) angeordneten ersten Teilkörper (16) aus einem ersten Material mit einer an ein Material des Schwingkörpers (12) angepassten akustischen Impedanz und einen an dem ersten Teilkörper (16) angeordneten zweiten Teilkörper (18) aus einem zweiten Material mit einer hohen akustischen Dämpfung aufweist. Dabei ist der erste Teilkörper (16) kegelförmig und mit der Bodenfläche auf dem Schwingkörper (12) angeordnet.

## Beschreibung

Die Erfindung betrifft einen Ultraschallwandler und ein Verfahren zum Erzeugen und/oder Aufnehmen von Ultraschall nach dem Oberbegriff von Anspruch 1 beziehungsweise 15.

Ultraschallwandler weisen eine schwingfähige Membran auf, häufig eine Keramik. Mit deren Hilfe wird auf Basis des piezoelektrischen Effekts ein elektrisches Signal in Ultraschall gewandelt und umgekehrt. Je nach Anwendung arbeitet der Ultraschallwandler als Schallquelle, Schalldetektor oder beides.

Eine Anwendung von Ultraschallwandlern ist die Durchflussmessung von Fluiden in Rohrleitungen nach dem Differenzlaufzeitverfahren. Dabei wird ein Paar Ultraschallwandler am Außenumfang der Rohrleitung mit einem gegenseitigen Versatz in Längsrichtung montiert, die quer zu der Strömung entlang des zwischen den Ultraschallwandlern aufgespannten Messpfades wechselseitig Ultraschallsignale aussenden und registrieren. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt an mehr als einem Punkt zu erfassen.

Bei einer derartigen Durchflussmessung muss der Ultraschall von den Wandlern in das Fluid eingekoppelt werden. Dazu werden die Ultraschallwandler regelmäßig im Innenraum der Rohrleitung montiert, so dass die Membran direkt im Kontakt mit dem Fluid steht. Die derart eintauchenden Wandler sind aber dem Fluid und dessen Druck und Temperatur ausgesetzt und werden dadurch womöglich beschädigt. Umgekehrt können die Wandler die Strömung stören und deshalb die Genauigkeit der Messung beeinträchtigen.

Die EP 1 378 272 B1 schlägt vor, die Ultraschall erzeugenden Elemente an einer Außenseite einer Wandung anzubringen. Die Membran wird dabei zum Teil der Wandung, die in dem entsprechenden Bereich eine erheblich geringere Wandstärke aufweist als die restliche Wandung.

Statt allein den Übergang zwischen Wandler und Fluid muss der Ultraschall bei derart montierten Wandlern gleich mehrere Grenzflächen mit akustischen Impedanzsprüngen von der Keramik zu der Rohrwand und weiter zu dem Fluid überwinden. Diese Impedanzsprünge führen zu Wellenreflexionen an den Mediumsgrenzen, was die Signalform des zu übertragenden Pulses im Zeitbereich stark beeinflusst und die abgestrahlte Leistung mindert. Weitere Störungen entstehen durch Reflexionen des an der Rückseite der Membran austretenden Ultraschalls in das Fluid hinein.

Im Stand der Technik ist bekannt, die Impedanzsprünge zwischen Membran und Medium durch Anpassungsschichten (Matching Layer) aufzufangen. Für schmalbandige Systeme lässt sich durch ein λ/4-Dickenverhältnis relativ einfach eine gute Anpassung erzielen. Auch die rückseitig abgestrahlte Leistung wird damit klein gehalten. Da aber definitionsgemäß eine λ/4-Schicht von der Wellenlänge abhängt, sind geeignete Anpassungsschichten unterschiedlicher Dicke für breitbandige Systeme nur sehr schwer realisierbar.

Auf der Rückseite verwenden herkömmliche Ultraschallwandler einen mechanischen Dämpfungsblock (Backing), um Reflexionen in die eigentliche Abstrahlrichtung zu unterdrücken. Die Rückreflexionen bleiben genau dann klein, wenn zwischen Membran und Absorbermaterial nur ein kleiner akustischer Impedanzsprung liegt. Gesucht ist demnach ein Material, welches gleichzeitig eine akustische Impedanz nahe der Membran und eine starke akustische Dämpfung aufweist. Derartige Materialeigenschaften finden sich aber in einem einzelnen Stoff nicht wieder.

Ein bekannter Lösungsansatz besteht in der Verwendung von Kompositen aus einem akustisch harten Metall zur Impedanzanpassung an die Membran und einem akustisch weichen Epoxidharz zur Dämpfung. Dabei wird die gewünschte Impedanz und Dämpung über das Volumenmischverhältnis kombiniert. Nachteilig hierbei ist die Herstellung, da das Gefüge zur Vermeidung von Lufteinschlüssen durch Blasenbildung unter hohem Druck zeitaufwändig gefertigt werden muss. Hinzu kommen praktische Schwierigkeiten, die Mischungsverhältnisse für die theoretisch benötigten Impedanzen und Dämpfungen reproduzierbar einzustellen. Gerade bei Kombinationen mit hoher Impedanz und hoher Dämpfung wird auch die erforderliche Schichtdicke schnell groß und erreicht die Größenordnung von Zentimetern. Damit eignet sich eine solche Kompositschicht nicht mehr für ein baukleines System mit Gesamtabmessungen im Millimeterbereich. Einen weiteren Nachteil stellt die thermische Veränderung des Harzes in dem Komposit dar, dessen Viskosität dann alterungsbedingte Änderungen des Transferverhaltens des Ultraschallwandlers mit sich bringt. Temperaturen beeinflussen auch die Klebung der verschiedenen Anpassungsschichten untereinander und auf der Membran. Dies ist besonders problematisch im Falle hoher Fluidtemperaturen und effizienter Wärmeankopplung beispielsweise in einer metallischen Rohrleitung.

Aus der US 2005/00775571 A1 ist ein Ultraschallwandler zur Umwandlung zwischen akustischer und elektrischer Energie mit einem Dämpfungsblock bekannt, der eine schallschluckende Oberfläche aufweist. Diese Oberfläche ist die Grenzfläche zwischen einem Metallblock und einem dämpfenden Epoxidharzkörper. Die Grenzfläche bildet eine Landschaft aus Spitzen und Tälern, in denen sich der Ultraschall durch Mehrfachreflexionen verliert. Dieser Ultraschallwandler, der für die Medizintechnik vorgeschlagen wird, eignet sich aber nicht für baukleine Durchflussmesser mit hoher Messgenauigkeit.

Es ist daher Aufgabe der Erfindung, einen kompakten Ultraschallwandler mit verbessertem Abstrahlverhalten anzugeben.

Diese Aufgabe wird durch einen Ultraschallwandler und ein Verfahren zum Erzeugen und/oder Aufnehmen von Ultraschall nach Anspruch 1 beziehungsweise 15 gelöst. Dabei geht die Erfindung von dem Grundgedanken aus, die rückwärtige Abstrahlung von Ultraschall mit Hilfe eines Dämpfungskörpers (Backing) zu unterdrücken. Dieser Dämpfungskörper weist ein erstes, an die akustische Impedanz des Schwingkörpers angepasstes Material und ein zweites Material mit hoher akustischer Dämpfung auf. Beide Materialien bilden eigene Teilkörper, sind also nicht zu einem Komposit vermischt, obwohl gewisse Verunreinigungen der Materialien der Teilkörper in der Regel hinnehmbar bleiben. Die dämpfende Wirkung entsteht aufgrund der Geometrie, indem der erste Teilkörper kegelförmig und mit der Bodenfläche auf dem Schwingkörper angeordnet ist. Dadurch bietet sich dem Ultraschall eine Grenzfläche an der inneren Mantelfläche des Kegels, die hinreichend schräg für eine Vorwärtsstreuung als Basis einer Mehrfachreflexion in dem Kegel steht. Sofern nach mehreren Reflexionen Ultraschall wieder in Richtung des Schwingkörpers zurückkehrt, ist ein Großteil der Schallenergie in dem zweiten Teilkörper absorbiert worden.

Die Erfindung hat den Vorteil, dass ein gutes Dämpfungsverhalten erreicht wird. Nur wenig Ultraschall wird überlagernd von der Rückseite nach vorne abgestrahlt, und es kommt deshalb insbesondere nach einem Ultraschallpuls allenfalls noch zu einem kurzen Nachschwingen. Die Anpassung des Ultraschallwandlers erfolgt im Gegensatz zu Anpassschichten für eine große Bandbreite, ohne dass der Dämpfungskörper einer zu großen Dicke bedarf. Damit wird ein breitbandiger Ultraschallwandler mit kurzer Bauform geschaffen. Zugleich ist die Herstellung einfacher und kostengünstiger, da im Gegensatz zu Anpassschichten und Kompositen weder komplizierte Herstellungsprozesse noch komplexe Materialien benötigt werden.

Der Dämpfungskörper ist bevorzugt zylindrisch, indem der zweite Teilkörper eine zylindrische Außenkontur und einen kegelförmigen Hohlraum zur Aufnahme des ersten Teilkörpers aufweist. Hier ist zylindrisch insbesondere im engen Sinne eines geraden Kreiszylinders zu verstehen. Der zweite Teilkörper ist dabei ein Zylinder mit einem Hohlkegel, der das Gegenstück des ersten Teilkörpers bildet, um diesen darin aufzunehmen. Damit entsteht insgesamt ein zylindrischer, leicht zu handhabender Ultraschallwandler.

Schwingkörper, erster Teilkörper und zweiter Teilkörper sind bevorzugt durch eine Druckkraft längs der Kegelachse zusammengehalten, insbesondere mittels einer Federkraft, die auf den zweiten Teilkörper einwirkt, oder eines auf den zweiten Teilkörper aufgeschraubten Gehäusedeckels. Der Ultraschallwandler kann wegen des Dämpfungskörpers aus einem kegelförmigen ersten Teilkörper und einem komplementären zweiten Teilkörper ohne Klebestellen zusammengesetzt werden und zentriert sich bei einer entsprechenden Druckkraft automatisch aufgrund der Geometrie. Diese Herstellung rein durch Pressdruck ist extrem einfach und führt wegen der klebefreien Verbindungen zu einer großen Beständigkeit beispielsweise gegenüber Temperaturveränderungen.

Die Mantelfläche des Kegels schließt mit der Bodenfläche bevorzugt einen Winkel zwischen 60° und 70° ein. Ein Winkel oberhalb von 60° stellt sicher, dass bei Auftreffen von Ultraschall an der Grenzfläche Vorwärtsstreuung weiter ins Kegelinnere und damit eine Mehrfachreflexion auftritt. Aber auch bei zu großen Winkeln, die nicht unterhalb von 70° liegen, unterstützt die Modenkopplung an den Grenzflächen die Dämpfung nicht mehr so gut. Außerdem vergrößert sich mit dem eingeschlossenen Winkel auch die Bauhöhe. Eine besonders gute Dämpfung ergibt sich bei einem Winkel von 65°. Es genügt aber auch, dieses Optimum mit gewissen Toleranzen zu treffen, denn Abweichungen von wenigen Grad wirken sich noch nicht allzu stark aus.

Der erste Teilkörper weist bevorzugt einen zylindrischen Sockel mit einem größeren Radius als die Bodenfläche des Kegels auf. Der erste Teilkörper bildet also einen Kegel, der etwas zurückgesetzt auf dem etwas größeren Sockel sitzt und dort einen umlaufenden Absatz freilässt. Das ist deshalb nützlich, weil der komplementäre zweite Teilkörper auf diese Weise keine umlaufende scharfe Kante haben muss, sondern eine gewisse Dicke entsprechend dem Absatz aufweisen kann. Ein solcher zweiter Teilkörper lässt sich je nach dafür verwendetem Material leichter herstellen.

Der zweite Teilkörper umschließt bevorzugt den Kegel, nicht jedoch den zylindrischen Sockel des ersten Teilkörpers. Somit bildet bis zu einer Höhe des Sockels das erste Material, für die übrige Höhe das zweite Material den äußeren Mantel des Dämpfungskörpers. Man kann dadurch das erste Material von außen kontaktieren. Außerdem würde die Grenzfläche im Sockelbereich ohnehin nicht von Ultraschall getroffen, so dass hier der zweite Teilkörper keinen Dämpfungsbeitrag leisten würde.

Das Material des Schwingkörpers ist bevorzugt eine Keramik. Solche Materialien sind verfügbar und bringen die erforderlichen piezoelektrischen Eigenschaften mit. Beispielsweise wird PZT (Blei-Zirkonat-Titanat) mit einer akustischen Impedanz im Bereich von 35 MRayl verwendet.

Das erste Material ist bevorzugt Messing, insbesondere CuZn39Pb2. Messing hat eine zu der Keramik passende akustische Impedanz. Außerdem bietet Messing fertigungstechnische Vorteile, denn es lässt sich verhältnismäßig einfach durch Drehen in die benötigte Kegelform bringen.

Das zweite Material ist bevorzugt ein Kunststoff, insbesondere PTFE. Kunststoffe dämpfen den Ultraschall stark. Gerade PTFE (Polytetrafluorethylen) ist hoch dämpfend und erlaubt dadurch geringe Bauhöhen und ist zugleich mechanisch stabil und temperaturfest.

Der Schwingkörper weist bevorzugt eine erste Elektrode auf einer der Rückseite gegenüberliegenden Vorderseite und eine zweite Elektrode auf der Rückseite auf, wobei die erste Elektrode mit einem Teilbereich um den Schwingkörper bis zur Rückseite herumgezogen und dort kontaktiert und die zweite Elektrode über den ersten Teilkörper kontaktiert ist. Die Vorderseite ist bei Montage des Ultraschallwandlers direkt auf einem anderen Material nicht zugänglich. Deshalb wird in dieser Ausführungsform die erste Elektrode von der Rückseite her zugänglich und kontaktierbar gemacht. Mit der zweiten Elektrode steht ohnehin der regelmäßig metallische erste Teilkörper in Verbindung, so dass die zweite Elektrode irgendwo an dem ersten Teilkörper kontaktiert werden kann.

Der erste Teilkörper weist bevorzugt eine Aussparung auf. Diese Aussparung entspricht zumindest teilweise dem herumgezogenen Anteil der ersten Elektrode, um hier eine Kontaktierung durch eine Anschlussleitung zu ermöglichen und einen Kurzschluss der beiden Elektroden durch einen metallischen ersten Teilkörper zu vermeiden.

In vorteilhafter Weiterbildung ist eine Ultraschalldurchflussmessvorrichtung zum Messen der Strömungsgeschwindigkeit von Fluiden in einer Rohrleitung vorgesehen, die einen in die Rohrleitung einsetzbaren und auf diese Weise einen Abschnitt der Rohrleitung bildenden Messkörper mit mindestens einem darin angeordneten Paar erfindungsgemäßer Ultraschallwandler sowie eine Auswertungseinheit zur Bestimmung der Strömungsgeschwindigkeit aus einer Laufzeitdifferenz von mit und gegen die Strömung ausgesandtem und empfangenem Ultraschall aufweist. Das zu messende Fluid ist beispielsweise eine Flüssigkeit mit einer akustischen Impedanz ähnlich Wasser, wie in der Lebensmittelindustrie, Pharmazie oder ähnlichen Anwendungen mit hohem Genauigkeits- und Hygieneanspruch verwendet. Dabei werden oft Rohrleitungen aus einem beständigen und gut zu reinigenden Edelstahl eingesetzt, so dass auch der Messkörper vorzugsweise aus Stahl hergestellt ist, um sich in die Rohrleitung einzupassen. Stahl hat andererseits eine hohe Temperaturübertragung, so dass die erfindungsgemäße Ausgestaltung der Ultraschallwandler ohne Klebung besonders vorteilhaft ist. In Ausführungsformen mit einer Aussparung des ersten Teilkörpers ist diese Aussparung bevorzugt zur Rohrwand hin angeordnet. Denn die Aussparung sorgt für eine asymmetrische Schallaussendung, und bei der genannten Anordnung werden Störungen durch Effekte dieser Asymmetrie minimiert.

Der Messkörper weist bevorzugt dünnwandige Bereiche auf, an denen die Ultraschallwandler von außen her derart montiert sind, dass ein dünnwandiger Bereich zusammen mit dem Schwingkörper als eine schwingungsfähige Membran der Ultraschallwandler wirkt. Die Ultraschallwandler nutzen also einen dünnwandigen Rohrleitungsabschnitt gemeinsam mit dem Schwingkörper als schwingfähige Membran. Die Ultraschallwander können so besonders einfach montiert werden. Gleichzeitig bleibt die Ultraschalldurchflussmessvorrichtung nach innen hin völlig glatt und bietet keine Möglichkeiten für Ablagerungen an den Ultraschallwandlern beziehungsweise an Fugen zwischen Ultraschallwandler und Innenwand der Rohrleitung. Solche Ablagerungen sind besonders in hygienischen Anwendungen zu vermeiden. Umgekehrt werden auch die Ultraschallwandler vor Einflüssen in der Rohrleitung geschützt. Gerade im Hygienebereich werden Drücke von 10 bis 15 Bar und Temperaturen bis 140° etwa bei Dampfreinigung ohne Weiteres erreicht.

Zwischen dem dünnwandigen Bereich und dem Schwingkörper ist bevorzugt eine isolierende Schicht insbesondere aus Parylene oder Siliziumdioxid (SiO₂) angeordnet. Eine elektrische Isolation des Schwingkörpers gegenüber einer leitenden Rohrleitung ist zum Nachweis des piezoelektrisch erzeugten Signals erforderlich. Parylene ermöglicht durch einen Sputterprozess eine nur nach Mikrometern messende Schichtdicke, die zwar elektrisch isoliert, akustisch aber weitgehend ohne Einfluss bleibt. Eine sehr dünne Schichtdicke ist auch für Siliziumdioxid in einem CVD-Prozess erreichbar und auch die elektrische Isolation ausreichend.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Ultraschallwandlers mit einem beispielhaften Schallpfad bei Mehrfachreflexion in dessen Dämpfungskörper;
- Fig. 2a: eine schematische Schnittdarstellung eines Ultraschallwandlers mit zylindrischem Sockel;
- Fig. 2b: eine schematische Schnittdarstellung eines Ultraschallwandlers mit einem abgesetzten zylindrischen Sockel;
- Fig. 3a: eine Draufsicht auf einen Schwingkörper mit zwei Elektroden zu dessen Kontaktierung über die Rückseite;
- Fig. 3b: eine dreidimensionale Ansicht eines kegelförmigen Teilkörpers des Dämpfungskörpers mit einer Aussparung zur Kontaktierung einer Elektrode des Schwingkörpers; und
- Fig. 4: eine schematische Schnittansicht eines Durchflussmessers mit einem Paar Ultraschallwandlern.

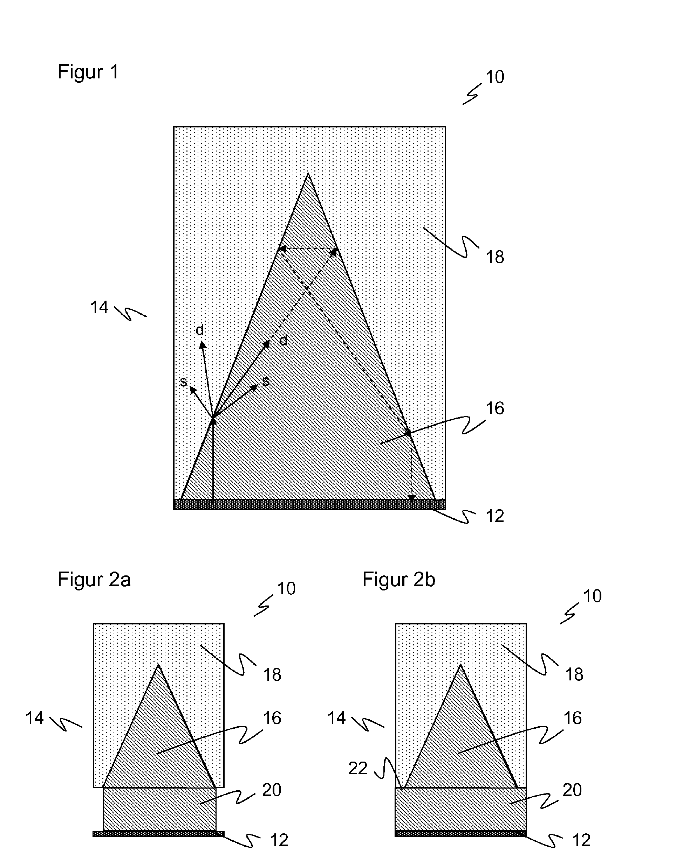

Figur 1 zeigt einen Ultraschallwandler 10 in einer schematischen Schnittdarstellung. Dabei werden weitere Merkmale eines Ultraschallwandlers, wie Anschlüsse und Signalaufbereitungen, ebenso wie das piezoelektrische Grundprinzip eines Ultraschallwandlers durch akustische Anregung und Erzeugung von Elektronen oder umgekehrt durch elektrische Erzeugung von Ultraschallschwingungen als bekannt vorausgesetzt und nicht weiter erläutert.

Der Ultraschallwandler 10 weist eine schwingfähige Membran oder einen Schwingkörper 12 aus einem piezoelektrischen Material, beispielsweise einer Keramik wie PZT (Blei-Zirkonat-Titanat) mit einer akustischen Impedanz von im Bereich von 35 MRayl auf. Die vorgesehene Abstrahlrichtung für Ultraschall ist senkrecht zu einer Vorderfläche des Schwingkörpers 12 und in der Darstellung der Figur 1 nach unten gerichtet. Ultraschall an der gegenüberliegenden Rückfläche kann zu Störungen führen, wenn der Ultraschall wieder nach unten zurückreflektiert wird. Deshalb wird an der Rückfläche des Schwingkörpers 12 ein Dämpfungskörper (Backing) angeordnet, der als Ganzes mit Bezugszeichen 14 versehen ist.

Die rückseitige Anpassung erfolgt durch Kombination zweier unterschiedlicher Materialien. Dazu wird ein erster Teilkörper 16, beispielsweise aus einem Metall wie Messing und insbesondere CuZn39Pb2, auf der Rückfläche des Schwingkörpers 12 angeordnet und schließt so gegen die Piezokeramik des Schwingkörpers 12 ab. Aufgrund des angepasst gewählten Materials des ersten Teilkörpers 16 ergibt sich nur ein sehr geringer Impedanzsprung, d.h. die rückseitig abgestrahlte Welle wird nahezu vollständig aus der Keramik des Schwingkörpers 12 ausgekoppelt.

An dem ersten Teilkörper 16 ist ein zweiter Teilkörper 18 aus einem Material wie einem Kunststoff und insbesondere PTFE (Polytetrafluorethylen) angeordnet. Das Material des zweiten Teilkörpers 18 hat eine hohe akustische Dämpfung bei einer jedoch wesentlich kleineren akustischen Impedanz als das Material des ersten Teilkörpers, beispielsweise 4,4 MRayl für PTFE. Die hohe Dämpfung des Materials bestimmt die Baulänge des Ultraschallwandlers, da die Amplitude der Welle entlang der Ausbreitungsrichtung exponentiell gedämpft wird.

Um Rückreflexionen in den Schwingkörper aus der Grenzfläche zwischen dem ersten Teilkörper 16 und dem zweiten Teilkörper 18 des rückseitigen Dämpfungskörpers 14 klein zu halten, wird geometrisch für eine möglichst große Grenzfläche zwischen den beiden Materialien des ersten Teilkörpers 16 und des zweiten Teilkörpers 18 gesorgt. Dazu ist der erste Teilkörper 16 kegelförmig ausgebildet und schließt an seiner Basis mit der Rückfläche des Schwingkörpers 12 einen Winkel zwischen 60° und 70° ein.

Diese besondere Geometrie führt dazu, dass die von dem ersten Teilkörper 16 kommende akustische Welle nicht senkrecht, sondern unter einem speziellen Winkel ungleich der Totalreflexion schräg auf die Oberfläche des zweiten Teilkörpers 18 trifft. Damit wird eine höhere Transmission in das Material des zweiten Teilkörpers 18 erzielt als bei senkrechtem Einfall. Grund ist die Kopplung zwischen longitudinal und transversal Moden, da für den hier als Schwingkörper 12 verwendeten dicken Schwinger longitudinale Moden relevanter sind.

Diese Modenkopplung in der kegelförmigen Struktur des Dämpfungskörpers 14 wird durch die Pfeile in Figur 1 verdeutlicht. Durch den Schrägeinfall propagiert die aus dem ersten Teilkörper 16 austretende Welle an der Grenzfläche zwischen dem ersten Teilkörper 16 und dem zweiten Teilkörper 18 entlang, d.h. die auftretenden Mehrfachreflexionen entlang der Grenzfläche streuen die akustische Welle tiefer in den gebildeten Dämpfungskeil oder Dämpfungskegel hinein. Dabei hängt der Effekt wesentlich von dem Neigungswinkel der Grenzfläche ab, der größer als 60° sein muss, um Vorwärtsstreuung zu gewährleisten. Die Buchstaben d und s an der ersten Reflexion der einfallenden akustischen Welle bezeichnen longitudinale und transversale Moden. Nur die nicht in den Absorber des zweiten Teilkörpers 16 einfallende longitudinale Mode trägt zu Störungen bei und wird an den weiteren Reflexionsstellen der Mehrfachreflexion durch Pfeile gezeigt.

Die Keil- oder Kegelform des ersten Teilkörpers 16 mit der komplementären Form des zweiten Teilkörpers 18, die gemeinsam für eine keil- oder kegelförmige Grenzfläche sorgen, bedingt demnach zum einen eine große Grenzfläche, zum anderen eine Streuung der Moden in das dämpfende Material des zweiten Teilkörpers 18 hinein. Die am Ende senkrecht ausfallende Welle, welche für den Störbeitrag steht, ist daher ganz erheblich abgeschwächt.

Wie bereits erläutert, sollte der Winkel zwischen der Basis des ersten Teilkörpers 16 und der Rückfläche des Schwingkörpers 12 mindestens 60° betragen. Andererseits zeigen theoretische Modelle der Modenkopplung, dass im Bereich von 65° eine deutliche Reduzierung der rückgestreuten Energie erreicht wird und somit ein Winkel von 65° ein Optimum darstellt. Das Optimum kann, muss aber nicht notwendig exakt eingehalten werden, beispielsweise ist ein Winkelbereich von 63°-67° oder 64°-66° ebenfalls geeignet. Aus den theoretischen Modellen der Modenkopplung kann neben der Untergrenze von 60° eine Obergrenze für den Winkel von 70° abgeleitet werden, wobei noch größere Winkel außerdem in Bezug auf die erforderliche Bauhöhe nachteilig wären. Bei anderen Materialien kann sich der Winkelbereich und der optimale Winkel verschieben, wobei die Materialien wegen der geforderten Anpassung ähnliche akustische Impedanzen aufweisen und damit auch ähnliche Winkel erfordern. Deshalb gelten die angegebenen Winkel, obwohl sie für eine spezifische Materialkombination ermittelt wurden, auch für andere Materialien.

Im Gegensatz zu üblichen Anpassschichten, die auf einen bestimmten Wellenlängenbereich abgestimmt sind, erlaubt der Dämpfungskörper 14 eine gute Dämpfung auch für einen breitbandigen Ultraschallwandler beispielsweise mit einer Bandbreite von 50kHz-20MHz beziehungsweise einer 6dB-Bandbreite Δf von 10MHz bei 10MHz Mittenfrequenz.

Figur 2a zeigt eine weitere Ausführungsform des Ultraschallwandlers 10 in einer Schnittdarstellung. Dabei bezeichnen hier und im Folgenden die gleichen Bezugszeichen gleiche oder einander entsprechende Merkmale. Die Zeichnungen der Ultraschallwandler 10 sind für eine bevorzugte Ausführungsform maßstabgetreu, wobei die Erfindung nicht auf diese Größenverhältnisse beschränkt ist. Die äußeren Abmessungen, also Bauhöhe und Durchmesser des insgesamt vorzugsweise zylindrischen Ultraschallwandlers 10 beträgt dabei beispielsweise einen Zentimeter bis zu einigen Millimetern.

Der Ultraschallwandler 10 gemäß Figur 2a unterscheidet sich von dem zu Figur 1 erläuterten Ultraschallwandler 10 durch einen zylindrischen Sockel 20 des ersten Teilkörpers 16. Dieser Sockel 20 ist bevorzugt nicht von dem zweiten Teilkörper 18 umgeben. Das bietet fertigungstechnische Vorteile, verhindert einen direkten Kontakt zwischen Schwingkörper 12 und zweitem Teilkörper 18 und ermöglicht eine Kontaktierung des ersten Teilkörpers 16 von außen.

Figur 2b zeigt eine weitere Ausführungsform des Ultraschallwandlers 10. Im Unterschied zu dem anhand der Figur 2a erläuterten Ultraschallwandler 10 weist der Sockel 20 einen größeren Radius auf als der kegelförmige Teil des ersten Teilkörpers 16. Dadurch ergibt sich ein umlaufender Absatz 22. Dadurch wird vermieden, dass der komplementäre zweite Teilkörper 18 zu dem ersten Teilkörper 16 hin mit einer scharfen umlaufenden Kante hergestellt werden muss. Dies wäre beispielsweise für einen zweiten Teilkörper 18 aus PTFE fertigungstechnisch nur schwer erreichbar.

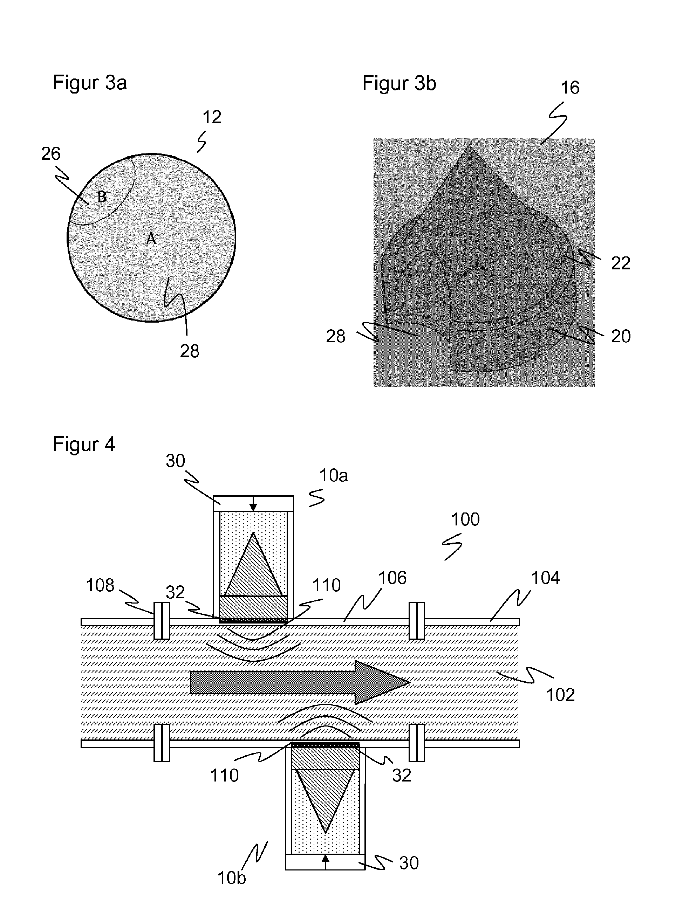

Um den Schwingkörper 12 anzusteuern beziehungsweise ein Signal durch Ultraschallanregung zu erfassen, müssen Elektroden zu dessen Kontaktierung vorgesehen sein. Der Ultraschallwandler 10 wird aber in einer bevorzugten Ausführungsform mit der Vorderfläche des Schwingkörpers 12 direkt auf einer Rohrleitung aufgesetzt, wie weiter unten im Zusammenhang mit Figur 4 noch erläutert wird. Die Vorderfläche des Schwingkörpers 12 ist damit unzugänglich.

Figur 3a zeigt eine Draufsicht auf eine Ausführungsform des Schwingkörpers 12 mit zwei Elektroden 24, 26 auf dessen Rückfläche. Die Elektrode 26 für die Vorderfläche wird dazu in einem kleinen Bereich um den Schwingkörper 12 herum auf dessen Rückfläche gezogen.

Figur 3b zeigt eine dreidimensionale Ansicht des ersten Teilkörpers 16 in einer zu der Elektrodenanordnung gemäß Figur 3a passenden Ausführungsform. Damit eine Befestigung einer Anschlussleitung beispielsweise durch einen Lötpunkt an der herumgezogenen Elektrode 26 erfolgen kann, ist in dem ersten Teilkörper 16 eine Aussparung 28 vorgesehen, die Keilform also in einem der Elektrode 26 entsprechenden Bereich ausgeschnitten. Die andere Elektrode 24 der Rückfläche wird bis auf die Aussparung 28 vollflächig von dem ersten Teilkörper 16 kontaktiert, so dass hier eine Anschlussleitung irgendwo an dem ersten Teilkörper 16 angelötet werden kann. Diese Kontaktierung erfolgt entweder an dem nicht von dem zweiten Teilkörper 18 umgebenen Sockel 20, oder es wird eine entsprechende Durchgangsöffnung in dem zweiten Teilkörper 18 für das Anschlusskabel angebracht. Übrigens ist in der dreidimensionalen Ansicht des ersten Teilkörpers 16 gemäß Figur 3b der anhand der Figur 2b erläuterte Absatz 22 an dem gegenüber dem Kegel etwas vergrößerten Sockel 20 noch einmal gut erkennbar.

Figur 4 zeigt in einer schematischen Schnittansicht einen Durchflussmesser 100 zur Messung der Strömungsgeschwindigkeit oder des Strömungsvolumens eines Fluids 102 in einer Rohrleitung 104 mit einem Paar erfindungsgemäßer Ultraschallwandler 10a-b. Die Bestimmung der Strömungsgeschwindigkeit erfolgt beispielsweise mit dem einleitend beschriebenen Laufzeitverfahren durch Auswertung der Laufzeiten bei Aussenden und Erfassen von Ultraschallsignalen zwischen dem Paar Ultraschallwandler 10a-b mit und gegen die Strömung in einer nicht dargestellten Auswertungseinheit.

Der Durchflussmesser 100 weist einen Messkörper 106 auf, der an Verbindungsstellen 108 in die Rohrleitung eingefügt ist und damit im montierten Zustand letztlich einen Teil der Rohrleitung 104 bildet. In dem Messkörper 106 sind Ausbuchtungen oder dünnwandige Teilbereiche 110 vorgesehen, an denen die Ultraschallwandler 10a-b montiert sind. Die dünnwandigen Teilbereiche 110 werden damit zugleich die fluidseitige Anpassungsschicht und Teil des schwingungsfähigen Systems. Die dünnwandigen Teilbereiche 110 bleiben dick genug, um einem zu erwartenden Kanalinnendruck von beispielsweise 15 bar standzuhalten und sind vorzugsweise so dünn, dass sie die Breitbandigkeit des Systems unterstützen.

Da die metallischen dünnwandigen Teilbereiche 110 mit dem Schwingkörper 12 als Wandlermembran dienen, muss eine direkte Berührung von der Piezokeramik des Schwingkörpers 12 und der dünnwandigen Teilbereiche 110 durch eine elektrische Isolierschicht 32 vermieden werden. Praktisch alle elektrisch isolierenden Materialien weisen aber eine deutlich geringere akustische Impedanz auf als die Piezokeramik und führen so zu einem störenden Impedanzsprung. Dieser Effekt lässt sich minimieren, wenn eine möglichst geringe Dicke der Isolierschicht 32 erreicht wird. Dafür eignen sich besonders Parylene oder SiO₂, die schon bei Schichtdicken weniger Mikrometer gegen hunderte von Volt isolieren. Die Schichtdicke kann durch Aufbringen der Isolierschicht 32 in einem Sputter- bzw. VCD-Prozess leicht kontrolliert und im Mikrometerbereich realisiert werden, so dass der effektive Impedanzsprung insgesamt möglichst klein bleibt.

Die Rohrleitung 104 hat beispielsweise eine Nennweite von ca. 10 cm und besteht für Anwendungen im Hygienebereich aus einem Edelstahl mit einer akustischen Impedanz von 42 MRayl geringfügig höher als die etwa 35 MRayl des Schwingkörpers 12. Das Fluid dagegen hat typischerweise eine deutlich geringere akustische Impedanz von beispielsweise 1,5 MRayl für Wasser und darauf basierende Flüssigkeiten.

Der geschichtet aus Schwingkörper 12, erstem Teilkörper 16 und zweitem Teilkörper 18 aufgebaute Ultraschallwandler 10a-b wird von hinten, also in Richtung auf der Kegelachse hin zu dem Schwingkörper 12, mittels einer Feder und/oder durch einen aufzuschraubenden Deckel 30 mit einem Gewinde insbesondere feiner Steigung auf den dünnwandigen Kanalbereich gepresst. Damit sind keinerlei Klebeverbindungen notwendig. Durch die kegel- beziehungsweise keilförmige Struktur werden die beiden Teilkörper 16, 18 automatisch zueinander ausgerichtet.

## Patentansprüche

1. Ultraschallwandler (10) mit einem Schwingkörper (12) zum Erzeugen und/oder Aufnehmen von Ultraschall und einem Dämpfungskörper (14), der einen an einer Rückseite des Schwingkörpers (12) angeordneten ersten Teilkörper (16) aus einem ersten Material mit einer an ein Material des Schwingkörpers (12) angepassten akustischen Impedanz und einen an dem ersten Teilkörper (16) angeordneten zweiten Teilkörper (18) aus einem zweiten Material mit einer hohen akustischen Dämpfung aufweist,
**dadurch gekennzeichnet,**
**dass** der erste Teilkörper (16) kegelförmig und mit der Bodenfläche auf dem Schwingkörper (12) angeordnet ist.

2. Ultraschallwandler (10) nach Anspruch 1,
wobei der Dämpfungskörper (14) zylindrisch ist, indem der zweite Teilkörper (18) eine zylindrische Außenkontur und einen kegelförmigen Hohlraum zur Aufnahme des ersten Teilkörpers (16) aufweist.

3. Ultraschallwandler (10) nach Anspruch 1 oder 2,
wobei Schwingkörper (12), erster Teilkörper (16) und zweiter Teilkörper (18) durch eine Druckkraft längs der Kegelachse zusammengehalten sind, insbesondere mittels einer Federkraft, die auf den zweiten Teilkörper (18) einwirkt, oder eines auf den zweiten Teilkörper (18) aufgeschraubten Gehäusedeckels (30).

4. Ultraschallwandler (10) nach einem der vorhergehenden Ansprüche,
wobei die Mantelfläche des Kegels mit der Bodenfläche einen Winkel zwischen 60° und 70°, insbesondere von etwa 65° einschließt.

5. Ultraschallwandler (10) nach einem der vorhergehenden Ansprüche,
wobei der erste Teilkörper (16) einen zylindrischen Sockel (20) mit einem größeren Radius als die Bodenfläche des Kegels aufweist.

6. Ultraschallwandler (10) nach Anspruch 5,
wobei der zweite Teilkörper (18) den Kegel, nicht jedoch den zylindrischen Sockel (20) des ersten Teilkörpers (16) umschließt.

7. Ultraschallwandler (10) nach einem der vorhergehenden Ansprüche, wobei das Material des Schwingkörpers (12) eine Keramik ist.

8. Ultraschallwandler (10) nach einem der vorhergehenden Ansprüche, wobei das erste Material Messing ist, insbesondere CuZn39Pb2.

9. Ultraschallwandler (10) nach einem der vorhergehenden Ansprüche, wobei das zweite Material ein Kunststoff, insbesondere PTFE ist.

10. Ultraschallwandler (10) nach einem der vorhergehenden Ansprüche, wobei der Schwingkörper (12) eine ersten Elektrode (26) auf einer der Rückseite gegenüberliegenden Vorderseite und eine zweite Elektrode (24) auf der Rückseite aufweist, wobei die erste Elektrode (26) mit einem Teilbereich um den Schwingkörper (12) bis zur Rückseite herumgezogen und dort kontaktiert und die zweite Elektrode (24) über den ersten Teilkörper (16) kontaktiert ist.

11. Ultraschallwandler (10) nach einem der vorhergehenden Ansprüche, wobei der erste Teilkörper (16) eine Aussparung (28) aufweist.

12. Ultraschalldurchflussmessvorrichtung (100) zum Messen der Strömungsgeschwindigkeit von Fluiden (102) in einer Rohrleitung (104), die einen in die Rohrleitung (104) einsetzbaren und auf diese Weise einen Abschnitt der Rohrleitung (104) bildenden Messkörper (106) mit mindestens einem darin angeordneten Paar Ultraschallwandler (10a-b) nach einem der vorhergehenden Ansprüche sowie eine Auswertungseinheit zur Bestimmung der Strömungsgeschwindigkeit aus einer Laufzeitdifferenz von mit und gegen die Strömung ausgesandtem und empfangenem Ultraschall aufweist.

13. Ultraschalldurchflussmessvorrichtung (100) nach Anspruch 12,
wobei der Messkörper (106) dünnwandige Bereiche (110) aufweist, an denen die Ultraschallwandler (10a-b) von außen her derart montiert sind, dass ein dünnwandiger Bereich (110) zusammen mit dem Schwingkörper (12) als eine schwingungsfähige Membran der Ultraschallwandler (10a-b) wirkt.

14. Ultraschalldurchflussmessvorrichtung (100) nach Anspruch 12 oder 13, wobei zwischen dem dünnwandigen Bereich (110) und dem Schwingkörper (12) eine isolierende Schicht (32) insbesondere aus Parylene oder SiO₂ angeordnet ist.

15. Verfahren zum Erzeugen und/oder Aufnehmen von Ultraschall mit einem Schwingkörper (12), wobei Ultraschall an einer Rückseite des Schwingkörpers (12) durch einen Dämpfungskörper (14) unterdrückt wird, der einen ersten Teilkörper (16) aus einem ersten Material mit einer an ein Material des Schwingkörpers (12) angepassten akustischen Impedanz und einen an dem ersten Teilkörper (16) angeordneten zweiten Teilkörper (18) aus einem zweiten Material mit einer hohen akustischen Dämpfung aufweist,
**dadurch gekennzeichnet,**
**dass** von dem Dämpfungskörper (14) in den Schwingkörper (16) zurückreflektierte Ultraschallwellen durch Mehrfachreflexion an einer Grenzfläche zwischen dem kegelförmig ausgebildeten und mit der Bodenfläche auf dem Schwingkörper (12) angeordneten ersten Teilkörper (16) und dem die Mantelfläche des Kegels umgebenden zweiten Teilkörpers (18) und durch Absorption in dem zweiten Teilkörper (18) zumindest teilweise unterdrückt werden.
